# EUROPÄISCHE PATENTSCHRIFT

(11) **EP 0 633 559 B1**
(45) Veröffentlichungstag und Bekanntmachung des Hinweises auf die Patenterteilung: **25.08.1999**
(21) Anmeldenummer: 94110416.8
(22) Anmeldetag: 05.07.1994
(51) Int. Cl.: G10L 9/00, G10L 3/02

(54) **Verfahren und Vorrichtung zur Spracherkennung**
Method and device for speech recognition
Méthode et dispositif pour la reconnaissance de la parole

(30) Priorität: 06.07.1993 DE 4322372
(43) Veröffentlichungstag der Anmeldung: 11.01.1995
(73) Patentinhaber: ALCATEL, 75008 Paris (FR)
(72) Erfinder: Trompf, Michael, D-71282 Hemmingen (DE); Hackbarth, Heidi, Dr., D-70825 Korntal (DE)
(74) Vertreter: Knecht, Ulrich Karl, Dipl.-Ing.

(56) Entgegenhaltungen:
- EP-A- 0 435 282
- IJCNN-91-SEATTLE, Bd.2, 8. Juli 1991, SEATTLE Seiten 795 - 800 H.B.D. SORENSEN 'Noise-robust speech recognition using a cepstral noise reduction neural network architecture'
- ICASSP-91, Bd.1, 14. Mai 1991, TORONTO Seiten 145 - 148 L.BARBIER ET AL. 'Robust speech parameters extraction for word recognition in noise using neural networks'

## Beschreibung

Die Erfindung betrifft ein Verfahren und eine Vorrichtung zur Spracherkennung von Sprache mit streßbedingten Aussprachevariationen oder von Sprache mit geräuschbehafteten und streßbedingten Aussprachevariationen.

Studien über die Veränderung von gesprochener Sprache unter Streßbedingungen sind bereits hinreichend aus dem Stand der Technik bekannt. Namentlich nach seinem Erfinder Etienne Lombard benannt, ist der Effekt der Veränderung der Sprache unter Streßbedingungen unter dem Namen "Lombard-Effekt" bekannt. Dieser Effekt besagt, daß sich z.B. die Wortdauer und z.B. die Aussprachefrequenzen bei Streßeinwirkung verändern. Die Wortdauer erhöht sich nachweislich. Unter Streß versteht man in diesem Fall ein hohes Umgebungsgeräusch oder auch eine weitere Tätigkeit die einen Teil oder einen großen Teil der Konzentration in Anspruch nimmt.

Automatische Spracherkennungssysteme die zur sprecherunabhängigen aber auch zur sprecherabhängigen Spracherkennung dienen, verwenden spezielle zusätzliche Informationen, die die Veränderungen der Sprache unter Einwirkung des Lombardeffektes berücksichtigen. Hierbei werden für sprecherabhängige und für sprecherunabhängige Spracherkennung jeweils unterschiediche Ergebnisse erzielt.

Verschiedene Lösungsmöglichkeiten zur Spracherkennung sind hierbei zum Beispiel die traditionellen Methoden wie Clustering-Techniken, stochastische Modellierung oder neuronale Netzwerke. Hierbei wird z.B. eine selektiv trainierte neuronale Netzwerk-Methode verwendet um isolierte Worte zu erkennen, indem der Lombardeffekt reduziert wird. Z.B. wird bei dieser Methode eine Erkennungsgenauigkeit von mehr als 85% erzielt ("The Variability of Speech Produced in Noise"; Jean-Claude JUNQUA, ESCA Workshop on Speech Processing in Adverse Conditions; Cannes; France; pp 43-51, 1992).

Desweiteren sind aus dem Stand der Technik zur automatischen Spracherkennung Methoden bekannt, die statische, dynamische und Akzelerations Merkmale der Sprache verwenden um sprecherunabhängige Spracherkennung durchzuführen. Die Methoden werden sowohl auf lombardbehaftete als auch auf geräuschbehaftete Sprache angewendet und führen zu unterchiedlichen Ergebnissen. Auch die Kombination der einzelnen Methoden führt zu unterschiedlichen Ergebnissen. Besonders bei sprecherabhängiger Spracherkennung können Probleme auftreten. ("Robust Speaker-Independant Word Recognition Using Static, Dynamic and Acceleration Features: Experiments with Lombard and Noisy Speech"; Brian A. Hanson and Ted H. Applebaum IEEE ICASSP 1990; pp 857-860; 1990).

Ein Verfahren zur automatischen Spracherkennung unter Einwirkung umgebungsbedingter Aussprachevarianten ist aus der deutschen Patentanmeldung DE-4024 890.9 bekannt. Hierbei wird nach Abschluß einer Erkennungsphase aus einem richtig erkannten Sprachmuster und deren Referenzsprachmuster durch eine gewichtete Mittelwertbildung ein neues Referenzsprachmuster berechnet und abgespeichert. Eine weitere Beschreibung und eine Erläuterung der erzielten Resultate z.B. bei Verwendung des Systems in einer Büroumgebung oder in einem Fahrzeug bei unterschiedlichen Geschwindigkeiten ist ebenfalls veröffentlicht (Noise-Robust Speech Recognition by Template Adaption"; S. Dvorak and T. Hörmann; DAGA 1991, Bochum, Seiten 1-3). Ebenso aus dem Stand der Technik bekannt ist ein sogenannter LC-MBCE-HMM Algorithmus (Lombard Compensation, Morphological Constrained Based Enhancement, Hidden Markov Model) zur automatischen Spracherkennung bei Geräuschen und bei Auftreten des Lombardeffekt. In diesem Verfahren konnte eine Verbesserung der Erkennungsrate von 36,44% auf 77,78% erreicht werden ("Improved Automatic Recognition of Speech in Noise and Lombard Effect", John H.L. Hansen, Oscar N. Brier; EUSIPCO 1992, Brussels, pp 403-406).

Die Spracherkennungsrate aller angegebenen Verfahren und Methoden beim Auftreten des Lombardeffektes und/oder geräuschbehafteter Sprache bedarf einer Erhöhung.

Insbesondere beim Einsatz von Spracherkennern im Kraftfahrzeug oder auch in einer Büroumgebung kann die Streßsituation des Sprechers sehr hoch sein. Im Kraftfahrzeug treten bei hohen Geschwindigkeiten starke Veränderungen der Sprache, ebenfalls bedingt durch die Streßsituation auf.

Aufgabe der Erfindung ist es deshalb eine hohe Spracherkennungsrate zu ermöglichen. Erfindungsgemäß wird diese Aufgabe durch die Lehre der Patentansprüche 1 und 4 gelöst.

Besonders vorteilhaft bei dem angegebenen Verfahren ist, daß keine Beschränkung auf isolierte Wörter vorliegt. Es können mit dem angegebenen Verfahren aus mehreren Wörtern bestehende Sätze erkannt werden.

Desweiteren ist es besonders vorteilhaft, daß gute Ergebnisse auch bei sprecherabhängiger Spracherkennung erzielt werden können. Demnach kann dieses Verfahren ohne Problem bei sprecherabhängiger und bei sprecherunabhängiger Spracherkennung verwendet werden.

Ein ebenfalls wichtiger Vorteil bei dem auftretenden Verfahren ist, daß bei der Verwendung neuronaler Netze ein automatisches Training erfolgen kann. Bei anderen Verfahren muß während des Trainings das zu lernende Wort mehrfach gesprochen werden. Dies ist aber insofern schwierig, als daß ein und dasselbe Wort schwierig unter denselben Bedingungen wiederholt werden kann. Bei den neuronalen Netzen gibt es aber die vorteilhafte Möglichkeit des automatischen Trainings.

Ein Vorteil ist ebenfalls, daß schon während der Trainingsphase des neuronalen Netzes ein objektives Maß des Fortschritts der Abbildung des geräuschbehafteten auf das geräuschfreie Sprachmuster zu ersehen ist. Durch z.B. Bildung des quadratischen Abbildungsfehlers zwischen den Sprachmustern kann ein Fehler minimiert werden. Bei üblichen Methoden kann erst auf das vom Spracherkenner erkannte Wort optimiert werden, wodurch eine zusätzliche Abhängigkeit vom Spracherkenner selbst hinzukommt.

Ein weiterer Vorteil ist, daß das erfindungsgemäße Verfahren kombinierbar ist mit anderen Verfahren zur Reduzierung des Lombardeffektes und zur Reduzierung von additiven Geräuschen.

Weitere vorteilhafte Ausgestaltungen sind den Unteransprüchen 2 bis 3 und 5 bis 6 zu entnehmen.

Nach Anspruch 2 ist es besonders vorteilhaft in der Trainingsphase mittels linearer dynamischer Zeitanpassung, dem sogenannten Dynamic-Time Warping - Verfahren, nach korrespondierenden Sprachmustern zu suchen. Dieses aus der Sprachadaption bekannte Verfahren kann vorteilhaft zur Suche nach korrespondierenden Sprachmustern beitragen.

Nach Anspruch 3 werden ebenso dialekt- und akzentabhängige Ausspracheänderungen trainiert, die bei einer Vielzahl von Sprechern vorhanden sind und von Zeit zu Zeit mehr oder minder stark geäußert werden.

Im folgenden wird die Erfindung anhand der Figuren näher erläutert. Folgende Figuren zeigen:
- Fig. 1: Blockschaltbild eines Ausführungsbeispiels der Erfindung,
- Fig. 2: Blockschaltbild eines Ausführungsbeispiels zur Durchführung des Verfahrens nach Anspruch 3.

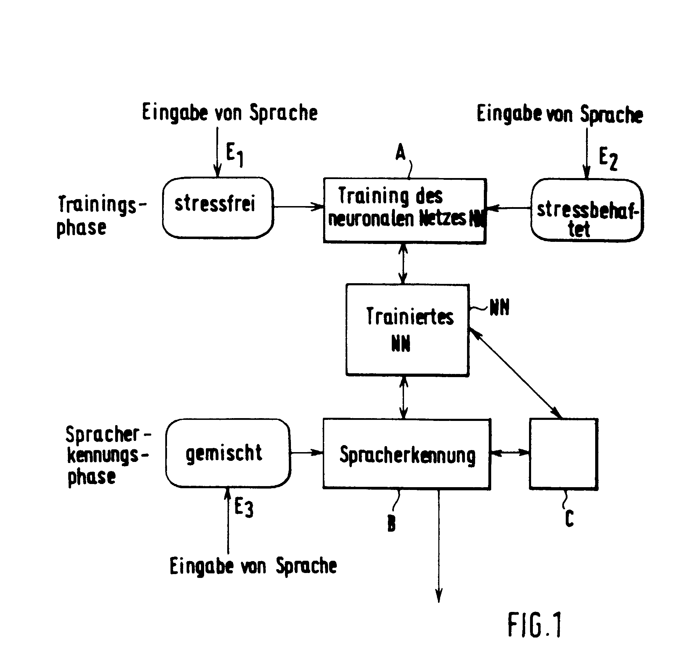

Im folgenden Teil wird anhand von Fig. 1 ein Ausführungsbeispiel des erfindungsgemäßen Verfahrens und der erfindungsgemäßen Vorrichtung erläutert.

Bei dem erfindungsgemäßen Verfahren und der erfindungsgemäßen Vorrichtung zur Spracherkennung wird die Sprache in Sprache mit streßbedingten Aussprachevarianten, in Sprache mit streßbedingten Aussprachevarianten plus Umgebungsgeräusche und in streßfreie plus geräuschfreie Sprache unterteilt.

In dem hier erläuterten Ausführungsbeispiel wird lediglich auf die streßbedingten Aussprachevarianten, die unter dem Namen Lombardeffekt bekannt sind, und auf die streßfreien Ausspracheeigenschaften eingegangen.

In einer Streßsituation, wie z.B. beim Fahren eines Kraftfahrzeugs mit hoher Geschwindigkeit, treten Veränderungen in der Aussprache auf. Die wesentlichen Merkmale sind bereits vorab erläutert worden.

Im Falle einer Spracherkennung kann das Problem auftreten, daß ein unter Streß gesprochenes Wort nicht mehr erkannt wird, weil das dem Spracherkenner bekannte Wort vorab in einer streßfreien Situation eingesprochen wurde und die veränderten Merkmale dem Spracherkenner nicht bekannt sind.

Um eine Spracherkennung durchführen zu können wird ein neuronales Netz NN mit nichtlinearen Abbildungseigenschaften verwendet. Mittels dieses neuronalen Netzes NN unter Ausnutzung der nichtlinearen Abbildungseigenschaften werden streßbehaftete Sprachmuster oder streßbehaftete plus geräuschbehaftete Sprachmuster auf streßfreie oder streßfreie plus geräuschreduzierte Sprachmuster abgebildet.

Bei Ausnutzung der nichtlinearen Abbildungseigenschaften muß keine konkrete Abbildungsfunktion vorgegeben werden. Demnach müssen auch nicht die Parameter der Abbildungsfunktion einzeln optimiert werden, sondern die ganze Abbildung als solche wird optimiert.

Eine Vorrichtung zur Spracherkennung von Sprache mit streßbedingten Aussprachevarianten oder von streßbedingten Aussprachevarianten in geräuschbehafteter Umgebung besteht aus einer Vorrichtung zur Eingabe von Sprache E₁, E₂, E₃.

Die erste Eingabe von Sprache E₁ dient zur Eingabe von streßfreier Sprache, die zweite Eingabe von Sprache E₂ dient zur Eingabe von streßbehafteter Sprache. Die dritte Eingabe von Sprache E₃ dient zur Eingabe von gemischter Sprache was bedeutet, daß die eingegebene Sprache sowohl streßfrei als auch streßbehaftet sein kann.

Die Vorrichtung besteht weiterhin aus ersten Mitteln A zur Durchführung eines Trainings eines neuronalen Netzes NN. Diese ersten Mittel A können sowohl auf die erste als auch auf die zweite Eingabe von Sprache E₁ und E₂ zugreifen.

Von dem ersten Mittel A aus besteht eine Verbindung zu dem neuronalen Netz NN. Die ersten Mittel A trainieren das neuronale Netz NN, wie später noch genauer erläutert wird.

Das neuronale Netz NN ist mit zweiten Mitteln B die Zugriff auf das trainierte neuronale Netz NN haben, verbunden. Die zweiten Mittel B dienen zur Spracherkennung. Über die dritte Eingabe von Sprache E₃ wird gemischte Sprache eingegeben, die von den zweiten Mitteln B erkannt werden soll.

Die Vorrichtung zur Spracherkennung besitzt ebenfalls dritte Mittel C, die unter Ausnutzung der nichtlinearen Eigenschaften des neuronalen Netzes NN z.B. die streßbehafteten Sprachmuster auf streßfreie Sprachmuster abbilden.

In einer Trainingsphase wird sowohl die streßfreie als auch die streßbehaftete Sprache den Mitteln A zum Training des neuronalen Netzes NN zugeführt. Die Aussprachevariationen zwischen der streßfreien Sprache und der streßbehafteten Sprache unterliegt systematischen Parameteränderungen. Aus repräsentativem Datenmaterial, d.h. z.B. aus Datenmaterial das in einer streßfreien Umgebung und aus Datenmaterial das z.B. bei einem hohen Konzentrationsaufwand für andere Dinge aufgenommen wurde, werden die systematischen Parameteränderungen gelernt und trainiert.

Schon während der Trainingsphase kann z.B. durch Bildung des quadratischen Abbildungsfehlers eine Minimierung des Fehlers zwischen den Sprachmustern vorgenommen werden. Demnach kann eine Optimierung unabhängig von dem verwendeten Spracherkenner vorgenommen werden.

Nach Beendigung der Trainingsphase werden die Ergebnisse dem trainierten neuronalen Netz NN zugeführt und stehen jederzeit zur Spracherkennung zur Verfügung.

Im Betrieb des Spracherkenners, der Spracherkennungsphase, greift das zweite Mittel B auf das trainierte Netz NN zu, wenn über die dritte Eingabe von Sprache E₃ Sprache zur Erkennung bereitgestellt wird.

Mittels des dritten Mittels C wird die Abbildung der streßbehafteten Sprachmuster auf die streßfreien Sprachmuster vorgenommen. Dies erfolgt unter Zuhilfenahme der nichtlinearen Abbildungseigenschaften des neuronalen Netzes.

Von den zweiten Mitteln B zur Spracherkennung aus, kann ein erkanntes Wort oder eine erkannte Vielzahl von Worten ausgegeben oder weitergegeben werden.

Zusätzlich zu der Abbildung von streßbehafteten Sprachmustern auf streßfreie Sprachmuster kann mit der oben beschriebenen Vorrichtung und dem ebenfalls beschriebenen Verfahren eine Reduzierung von zusätzlichen Geräuschen erfolgen.

Das vorab erläuterte Verfahren und die Vorrichtung können ebenfalls zur Erkennung von durch einen Dialekt oder auch einen Akzent veränderte Sprache verwendet werden, wenn die dialektbedingten Aussprachevariationen durch Training von deren systematischen Parameteränderungen trainiert werden.

Wie zuvor erläutert müssen in der Trainingsphase streßfreie und streßbehaftete Sprache vorliegen. Die Herstellung von streßfreier Sprache ist aber schwierig, da z.B. ein Wort das zuvor unter Streß generiert und aufgenommen wurde, nur sehr schwierig identisch, aber streßfrei generiert und aufgenommen werden kann. Besonders problembehaftet sind hierbei Zeitdauerschwankungen z.B. auf Wortebene. Beispielsweise kann ein mehrsilbiges Wort schwierig identisch unter Streß und ohne Streß reproduziert werden.

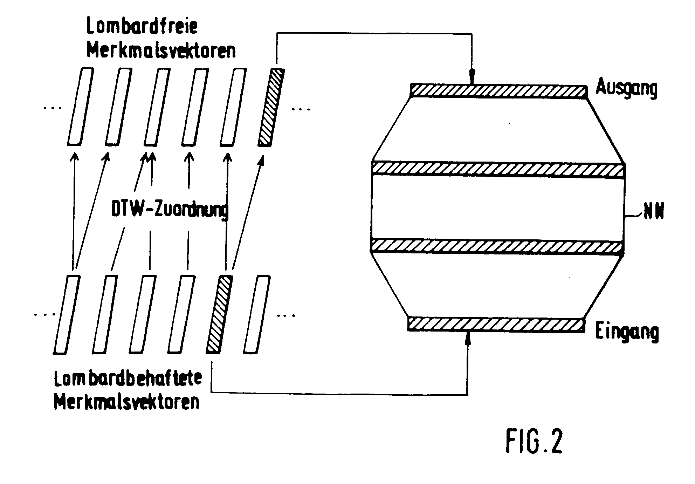

Eine Lösung des Problems wird anhand von Figur 2 im folgenden Teil erläutert.

Eine Lösungsmöglichkeit ist die Suche nach korrespondierenden Abschnitten in den Sprachmustern unter Verwendung der nichtlinearen dynamischen Zeitanpassung (Dynamic Time Warping ≙ DTW) DTW. Die nichtlineare dynamische Zeitanpassung ist ein aus der Sprecheradaption bereits bekanntes Standard-Mustervergleichsverfahren mit dem auf Wortebene nach korrespondierenden Sprachabschnitten gesucht wird, die wiederum zum Training des neuronalen Netzes NN verwendet werden.

Eine Möglichkeit der Verwendung der nichtlinearen dynamischen Zeitanpassung, im folgenden DTW genannt, ist die Verwendung auf Merkmalsvektorebene, wie Figur 2 zeigt.

Die gesprochenen Wörter werden auf eine konstante Anzahl k von Merkmalsvektoren mittels DTW normiert, beispielsweise auf k=40. Sowohl in den streßfreien als auch in den streßbehafteten Merkmalsvektoren wird nach korrespondierenden Stellen in dem Wert gesucht. Das Training des neuronalen Neztes NN zur Abbildung und die Abbildung während der Spracherkennung erfolgt auf Vektorbasis, da durch DTW korrespondierende Signalabschnitte gefunden wurden.

Eine weitere Möglichkeit (ohne Zeichnung) ist die Verwendung auf der Basis von Wortuntereinheiten wie z.B. Phoneme, Diphone, Vokale, Konsonanten, Silben oder Silbenteile. Auch hier werden die Wortuntereinheiten auf die gleiche Zahl von Merkmalsvektoren längennormiert. Auch in diesem Verfahren werden korrespondierende Signalabschnitte mittels DTW zugeordnet. Das Training des neuronalen Netzes NN erfolgt auf der Ebene der Wortuntereinheiten und die Reduktion der Variationen der Sprache durch Streßeinwirkung erfolgt auf Merkmalsvektorebene oder auf der Basis der Wortuntereinheiten.

Als weitere Möglichkeit gibt es noch die Normierung auf ein ganzes Wort. Die Reduzierung der Streßeinwirkung auf die Sprache erfolgt dann ebenfalls auf Ganzwortebene.

## Patentansprüche

1. Verfahren zur Spracherkennung von Sprache mit streßbedingten Aussprachevariationen oder mit streßbedingten Aussprachevariationen in geräuschbehafteter Umgebung, bei dem ein neuronales Netz (NN) während einer Trainingsphase systematische Parameteränderungen von streßbedingten Aussprachevarianten -den Lombardeffekt- und von streßbedingten geräuschbehafteten Aussprachevarianten aus repräsentativem Datenmaterial trainiert, und in einer Spracherkennungsphase mittels der trainierten Parameteränderungen unter Ausnutzung von nichtlinearen Abbildungseigenschaften durch Streß veränderte Sprachmuster auf streßfreie Sprachmuster abbildet, oder durch Streß veränderte Sprachmuster in geräuschbehafteter Umgebung auf geräuschreduzierte, streßfreie Sprachmuster abbildet.

2. Verfahren nach Anspruch 1,
bei dem während der Trainingsphase des neuronalen Netzes mittels nichtlinearer dynamischer Zeitanpassung (DTW) abschnittsweise nach korrespondierenden streßfreien und streßbehafteten Sprachmustern, oder nach korrespondierenden geräuschlosen streßfreien und geräuschbehafteten streßbehafteten Sprachmustern gesucht wird.

3. Verfahren nach einem der Ansprüche 1 oder 2,
bei dem das neuronale Netz (NN) auf akzent- und dialektabhängige Ausspracheänderungen trainiert wird.

4. Vorrichtung zur Spracherkennung von Sprache mit streßbedingten Aussprachevariationen oder mit streßbedingten Aussprachevariationen in geräuschbehafteter Umgebung, bestehend aus
- einer Vorrichtung zur Eingabe von Sprache (E₁, E₂, E₃),
- ersten Mitteln (A) zum Durchführen eines Trainings für ein neuronales Netz (NN),
- dem neuronalen Netz (NN),
- zweiten Mitteln (B) zur Durchführung einer Spracherkennung mit Zugriffsmöglichkeiten auf das neuronale Netz (NN) und
- dritten Mitteln (C), die unter Ausnutzung der nichtlinearen Abbildungseigenschaften des neuronalen Netzes (NN) streßbehaftete Sprachmuster oder streßbehaftete Sprachmuster in geräuschbehafteter Umgebung auf streßfreie oder streßfreie, geräuschreduzierte Sprachmuster abbilden.

5. Vorrichtung nach Anspruch 4,
bei der ein zweites neuronales Netz zur Reduzierung von additiven Hintergrundgeräuschen hinzugeschaltet wird.

6. Vorrichtung nach Anspruch 4,
bei der ein zusätzliches Mittel zur Reduzierung von additiven Hintergrundgeräuschen hinzugeschaltet wird.

## Claims

1. Process for speech recognition of speech with variations of pronunciation due to stress or with variations of pronunciation due to stress in a noisy environment, in which, during a training phase, a neural network (NN) trains systematic parameter changes of pronunciation variations due to stress - the Lombard effect - and pronunciation variations due to stress and noise, from representative data material, and in a speech recognition phase, by means of the trained parameter changes and using non-linear imaging characteristics, reproduces speech patterns modified by stress in stress-free speech patterns, or reproduces speech patterns modified by stress in a noisy environment in noise-reduced, stress-free speech patterns.

2. Process according to Claim 1, in which, during the training phase of the neural network, by means of non-linear dynamic time warping (DTW), a section-by-section search is made for corresponding stress-free speech patterns and those affected by stress, or for corresponding noise-less, stress-free and noisy speech patterns affected by stress.

3. Process according to one of Claims 1 or 2, in which the neural network (NN) is trained to variations in pronunciation related to accent and dialect.

4. Device for speech recognition of speech with variations of pronunciation due to stress or with variations of pronunciation due to stress in a noisy environment, comprising
- a device for inputting speech (E₁, E₂, E₃),
- first means (A) for carrying out training for a neural network (NN),
- the neural network (NN),
- second means (B) for implementing speech recognition having facilities for access to the neural network (NN), and
- third means (C), which reproduce speech patterns affected by stress or speech patterns affected by stress in a noisy environment in stress-free speech patterns or stress-free, noise-reduced speech patterns, using the non-linear imaging characteristics of the neural network (NN).

5. Device according to Claim 4, in which a second neural network for reducing additive background noise is added.

6. Device according to Claim 4, in which additional means for reducing additive background noise are added.

## Revendications

1. Procédé pour la reconnaissance de la parole avec des variations de prononciation dues au stress ou avec des variations de prononciation dues au stress dans un environnement sujet au bruit, dans lequel un réseau neurcnal (NN) entraîne pendant une phase d'entraînement des modifications de paramètres systématiques de variantes de prononciation dues au stress - l'effet Lombard - et de variantes de prononciation dues au stress et sujettes au bruit à partir d'une quantité de données représentative, et reproduit pendant une phase de reconnaissance de la parole au moyen des modifications de paramètres entraînées des profils vocaux modifiés par le stress sur des profils vocaux exempts de stress en exploitant des caractéristiques de représentation non linéaires, ou reproduit des profils vocaux modifiés par le stress dans un environnement sujet au bruit sur des profils vocaux exempts de stress et avec un bruit réduit.

2. Procédé selon la revendication 1, dans lequel, pendant la phase d'entraînement du réseau neuronal au moyen de l'adaptation temporelle dynamique non linéaire (DTW), des profils vocaux correspondants exempts de stress et sujets au stress, ou des profils vocaux correspondants exempts de stress et exempts de bruit et sujets au stress et au bruit sont recherchés.

3. Procédé selon l'une quelconque des revendications 1 ou 2, dans lequel le réseau neuronal (NN) est entraîné pour des modifications de prononciation dépendantes des accents ou des dialectes.

4. Dispositif pour la reconnaissance de la parole pour la parole avec des variations de prononciation dues au stress ou avec des variations de prononciation dues au stress dans un environnement sujet au bruit, comprenant :
- un dispositif pour entrer de la parole (El, E2, E3),
- des premiers moyens (A) pour réaliser un entraînement pour un réseau neurcnal (NN),
- le réseau neuronal (NN),
- des deuxièmes moyens (B) pour réaliser une reconnaissance de la parole avec des possibilités d'accès au réseau neuronal (NN), et
- des troisièmes moyens (C), qui reproduisent des profils vocaux sujets au stress ou des profils vocaux sujets au stress dans un environnement sujet au bruit sur des profils vocaux exempts de stress ou exempts de stress avec réduction de bruit, en exploitant les caractéristiques de reproduction non linéaires du réseau neuronal (NN).

5. Dispositif selon la revendication 4, dans lequel un deuxième réseau neuronal pour réduire des bruits de fond supplémentaires est connecté en plus.

6. Dispositif selon la revendication 4, dans lequel des moyens supplémentaires pour réduire des bruits de fond supplémentaires sont connectés en plus.
